(19) Europäisches Patentamt / European Patent Office / Office européen des brevets

(11) **EP 4 650 648 A1**

(12) **DEMANDE DE BREVET EUROPEEN**

(43) Date de publication:
**19.11.2025 Bulletin 2025/47**

(21) Numéro de dépôt: **25173256.6**

(22) Date de dépôt: **29.04.2025**

(51) Classification Internationale des Brevets (IPC):
**F17C 13/02** *(2006.01)*    **F17D 1/04** *(2006.01)*

(52) Classification Coopérative des Brevets (CPC):
**F17C 13/02; F17C 13/025; G01L 9/0027;**
F17C 13/026; F17C 2201/0109; F17C 2201/0119;
F17C 2201/03; F17C 2201/054; F17C 2205/018;
F17C 2205/0338; F17C 2205/0352; F17C 2221/011;
F17C 2221/031; F17C 2223/0123; F17C 2223/0161;
(Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **14.05.2024 FR 2404936**

(71) Demandeur: **L'AIR LIQUIDE, SOCIETE ANONYME POUR L'ETUDE ET L'EXPLOITATION DES PROCEDES GEORGES CLAUDE 75007 Paris (FR)**

(72) Inventeur: **BOULANGER, Thierry 75007 Paris (FR)**

(74) Mandataire: **Air Liquide L'Air Liquide S.A. Direction de la Propriété Intellectuelle 75, Quai d'Orsay 75321 Paris Cedex 07 (FR)**

(54) **SYSTÈME NON-INVASIF DE SURVEILLANCE D'UN RÉSEAU DE DISTRIBUTION DE GAZ MÉDICAUX**

(57) L'invention concerne un système non-invasif de surveillance d'un réseau de distribution de gaz agencé dans un établissement hospitalier comprenant une source de gaz (1) reliée à un conduit de gaz principal (21) se ramifiant en plusieurs conduits de gaz secondaires (31, 32), en aval d'un dispositif régulateur de pression (23). Des jauges de contrainte (6, 6a, 6b) sont agencées sur les conduits de gaz (21, 31, 32) en alliage de cuivre. Des moyens de mesure de température (68) sont agencés sur l'un ou des conduits de gaz (21, 31, 32) pour y mesurer la température du conduit de gaz (21, 31, 32), et fournir ces mesures à une unité de contrôle (64) qui détermine une résistivité (R) de chaque jauge (6, 6a, 6b) à partir de la déformation de la piste résistive (62) de la jauge (6, 6a, 6b) considérée, d'une valeur de résistivité de référence (Ro), et des mesures de température. La pression de gaz s'exerçant dans le conduit de gaz (21, 31, 32) est déterminée à partir de la résistivité (R) de chaque jauge (6, 6a, 6b). Installation d'alimentation en gaz (100) comprenant un tel système de surveillance.

FIG. 2

**(Cont. page suivante)**

(52) Classification Coopérative des Brevets (CPC):
(Cont.)F17C 2223/0169; F17C 2223/033;
F17C 2225/0123; F17C 2225/033; F17C 2225/035;
F17C 2250/032; F17C 2250/034; F17C 2250/036;
F17C 2250/043; F17C 2250/0439;
F17C 2250/0469; F17C 2250/0626;
F17C 2260/044; F17C 2265/068; F17C 2270/02;
F17C 2270/025; F17D 1/04

**Description**

L'invention concerne un système de surveillance non-invasif d'un réseau de distribution de gaz dans un établissement hospitalier permettant de fournir des informations relatives à la distribution des gaz dans un ou plusieurs services de l'établissement hospitalier, en particulier pour alerter en cas de surcharge localisée, c'est-à-dire de surpression d'une portion du réseau de distribution du gaz ; et une installation d'alimentation en gaz comprenant un réseau de conduits de distribution de gaz agencé au sein d'un établissement hospitalier et équipé du système de surveillance non-invasif selon l'invention.

Dans les établissements hospitaliers, tels les hôpitaux, les cliniques ou autres, il est nécessaire d'amener des gaz médicaux, en particulier de l'air et de l'oxygène ($O_2$) de qualité médicale, jusqu'aux différents points d'utilisation au sein de ces établissements, par exemple les services de réanimation ou d'urgence, les salles d'opération...

Généralement, les gaz médicaux sont stockés dans des réservoirs ou capacités de stockage de grande capacité, agencés à l'extérieur de l'établissement hospitalier qui sont réapprovisionnés en gaz par des camions citernes servant à acheminer les gaz depuis leur site de production jusqu'aux établissements hospitaliers.

Les gaz sont ensuite distribués aux différents points d'utilisation, c'est-à-dire les différents services hospitaliers, par des conduites, lignes ou canalisations de gaz, couramment appelé « réseau de distribution de gaz » ou « réseau de gaz ».

Opérer un suivi de la distribution des gaz médicaux dans les établissements hospitaliers est primordial pour pouvoir connaître la consommation spécifique des différents services et gérer les réapprovisionnements de sorte d'éviter toute rupture d'approvisionnement en gaz qui pourrait compromettre la sécurité des patients, comme lors de la pandémie liée au Covid-19, où les consommations en gaz médicaux, notamment en oxygène ($O_2$), ont été décuplées du fait d'un afflux très important et inhabituel de patients à traiter.

Par ailleurs, l'émergence de nouvelles techniques de prise en charge des patients, telle que l'oxygénation à haut débit ou « HFOT » (pour *High Flow Oxygen Therapy*)*,* a exacerbé le besoin de volumes d'oxygène importants, en particulier dans les services de réanimation, donc la mise en place, là encore, d'un suivi étroit des réseaux de distribution de gaz hospitaliers et de leur consommation.

Or, un réseau de distribution de gaz est censé délivrer, sur une plage de débits donnés, une pression gazeuse nominale aux différentes prises de distribution des gaz, c'est-à-dire les prises murales hospitalières, qu'il alimente en gaz. Ces prises murales sont agencées dans les services ou les pièces de l'établissement hospitalier. Ces prises murales assurent le raccordement fluidiquement et l'alimentation en gaz de dispositifs médicaux, tels que débitmètres, ventilateurs médicaux, dispositifs de délivrance d'oxygène à haut débit... servant à fournir le gaz aux patients en ayant besoin. Un exemple de prise murale hospitalière est donné par EP-A-3922895.

Il appartient aux techniciens installant le réseau de gaz médicaux et aux responsables techniques de l'hôpital ou analogue, de déterminer les consommations attendues (avec un facteur de sécurité) afin de dimensionner le réseau de gaz médicaux, notamment de bien choisir le diamètre des conduites de gaz ou analogues, afin de garantir une pression gazeuse nominale dans la plage de débits souhaitée, notamment en fonction des besoins de chaque service hospitalier, lesquels sont variables d'un service à l'autre. En général, la pression nominale de service est de l'ordre de 4 à 5 bar relatifs, tel que préconisé par la norme ISO7396-1.

Toutefois, malgré les précautions prises lors de l'installation d'un réseau de gaz médicaux, il arrive qu'en cas de pic de consommation, le réseau de gaz médicaux ne puisse subvenir à la demande en gaz et donc maintenir la pression nominale, ce qui entraine le dysfonctionnement des dispositifs médicaux connectés aux prises murales puisqu'ils sont alors « sous-alimentés » en gaz.

On comprend que cette insuffisance de gaz, e.g. d'oxygène, engendre un problème de sécurité pour les patients et par ailleurs un stress important pour le personnel soignant, en particulier lorsque la demande en gaz est très importante, comme pendant la pandémie liée au Covid-19 ou lors d'un traitement de type « HFOT ».

Afin de tenter d'y répondre, EP1983251 propose une installation de débitmètres en différentes localisations du réseau de distribution de gaz médicaux de manière à opérer une surveillance du réseau de distribution de gaz, i.e., de la distribution de gaz. En effet, en connaissant les niveaux de consommation de gaz et la nature du réseau, il est possible de détecter toute augmentation de consommation de gaz par un service donné et dès lors d'anticiper une saturation à venir de ce service de sorte de pouvoir réorienter de façon précoce des patients vers d'autres services dans lesquels la demande en gaz est moins importante et donc d'éviter les dysfonctionnements d'approvisionnement en gaz.

Toutefois, devoir installer des débitmètres en différents points ou sites du réseau de gaz d'installations hospitalières existantes n'est pas idéal car cela nécessite, aux différents sites du réseau devant recevoir un débitmètre, d'interrompre, i.e. couper, le conduit du réseau pour y installer le débitmètre, ce qui peut conduire à des entrées de poussières ou d'autres polluants dans le conduit ou le réseau de gaz et engendrer alors un risque de dysfonctionnement des équipements situés en aval, voire même conduire à des accidents, tels des incendies ou autres, en particulier en présence d'oxygène.

De plus, interrompre un conduit d'un réseau de gaz d'une installation hospitalière existante nécessite une mise en place d'une solution alternative d'alimentation en gaz afin d'assurer une continuité de l'approvisionnement en gaz des patients, pendant toute la durée de leurs interventions ou traitements, ce qui engendre des contrainte logistiques, organisationnelles et/ou n'est pas toujours possible ou aisé à mettre en œuvre.

On connait par ailleurs US2023/285709 qui enseigne un appareil de délivrance de NO/$N_2$ comprenant un circuit de gaz interne avec détendeur de gaz, lequel est alimenté par des sources de NO/$N_2$. Cet appareil fournit le mélange NO/$N_2$ à une branche inspiratoire reliée à une interface respiratoire. La branche inspiratoire est par ailleurs alimentée en air ou un mélange $N_2/O_2$ (>20% $O_2$) provenant d'un ventilateur médical de manière à diluer le mélange NO/$N_2$ avec de l'air ou le mélange $N_2/O_2$ de manière à obtenir la posologie en NO souhaitée. Un tel appareil n'est absolument pas adapté pour opérer une surveillance du réseau de distribution de gaz d'un établissement hospitalier. Il permet uniquement de surveiller son circuit interne.

Par ailleurs, EP3985371 enseigne un conduit de gaz comprenant un capteur imprimé sur sa paroi externe. Le capteur peut être de type un capteur de température, une jauge de contrainte, un détecteur de fuite ou autre. Le conduit est en polymère thermoplastique de type polyéthylène, polyamide, polypropylène...

Dès lors, un problème est de pouvoir opérer une surveillance efficace d'un réseau distribution de gaz au sein d'un établissement hospitalier, typiquement une installation hospitalière de distribution de gaz existante, sans avoir à interrompre les conduits du réseau de l'installation hospitalière, lesquels sont en alliage de cuivre, et/ou tout en assurant une continuité d'approvisionnement en gaz aux patients, c'est-à-dire de pouvoir mesurer la consommation en gaz médicaux en différents endroits du réseau de distribution de gaz considéré, sans rencontrer les inconvénients susmentionnés.

Une solution de l'invention concerne alors un système de surveillance d'un réseau de distribution de gaz agencé au sein d'un établissement hospitalier, tel un hôpital, une clinique, un centre de soins ou analogue, comprenant :

- une source de gaz reliée fluidiquement à un conduit de gaz principal,
- un dispositif régulateur de pression agencé sur le conduit de gaz principal, le conduit de gaz principal se ramifiant en plusieurs conduits de gaz secondaires, en aval du dispositif régulateur de pression, lesdits conduit de gaz principal et secondaires véhiculant du gaz sous pression, et
- des jauges de contrainte agencées en aval du dispositif régulateur de pression, sur les conduits de gaz principal et/ou secondaires.

Par ailleurs, le système de surveillance de l'invention comprend en outre:

- les conduits de gaz sont en alliage de cuivre,
- des moyens de mesure de température sont agencés sur au moins l'un des conduits de gaz, en aval du dispositif régulateur de pression, afin d'y opérer au moins une mesure de température dudit conduit de gaz, lesdits moyens de mesure de température étant configurés pour fournir ladite au moins une mesure de température à au moins une unité de contrôle,
- chaque jauge de contrainte comprend une piste résistive déformable configurée pour se déformer proportionnellement à la pression du gaz s'exerçant dans le conduit de gaz sur lequel la jauge de contrainte considérée est agencée, les jauges de contrainte étant chacune associées à l'unité de contrôle, et
- l'unité de contrôle est configurée pour :

  a) déterminer une résistivité (R) de chaque jauge de contrainte à partir de la déformation de la piste résistive de la jauge de contrainte considérée, d'une valeur de résistivité de référence (Ro), et de ladite au moins une mesure de température fournie par les moyens de mesure de température, et
  b) déterminer au moins une pression de gaz à partir de la résistivité (R) de chaque jauge de contrainte, chaque pression de gaz déterminée reflétant la pression du gaz s'exerçant dans le conduit de gaz sur lequel la jauge de contrainte considérée est agencée.

Selon le mode de réalisation considéré, le système de surveillance de l'invention peut comprendre l'une ou plusieurs des caractéristiques suivantes :

- il est non-invasif.
- les moyens de mesure de température comprennent au moins un capteur de température relié à l'unité de contrôle.
- la (ou chaque) unité de contrôle comprend au moins un (micro)processeur.
- préférentiellement, les conduits de gaz sont en un alliage de cuivre de type Cu-DHP.
- la résistivité (R) de chaque jauge de contrainte est déterminée en prenant en compte ladite au moins une mesure de température (T) et une température de référence mémorisée ($T_0$).
- la (ou chaque) unité de contrôle est configurée pour déterminer une résistivité en température à partir de ladite au moins une mesure de température (T) et d'une température de référence mémorisée (T$_0$).

- la résistivité (R) de chaque jauge de contrainte est déterminée en prenant en compte ladite au moins une mesure de température (T), un (le) coefficient d'expansion thermique de l'alliage de cuivre et une température de référence (T$_0$) mémorisée.
- chaque jauge de contrainte comprend une piste résistive déformable agencée sur un support comprenant des moyens de fixation permettant une fixation à la paroi périphérique externe d'un conduit de gaz.
- la ou chaque unité de contrôle est configurée pour déterminer, à partir de la valeur de résistance R déterminée, de ladite au moins une mesure de température fournie par les moyens de mesure de température et d'une base de donnée donnant une correspondance entre pression et résistance R, la pression gazeuse régnant dans lesdits conduits de gaz principal et secondaires véhiculant du gaz sous pression agencés en aval du dispositif régulateur de pression.
- il comprend des moyens de mémorisation pour mémoriser la valeur de résistivité de référence Ro et la base de donnée.
- la température de référence mémorisée (T$_0$) est mémorisée par les moyens de mémorisation.
- le coefficient d'expansion thermique de l'alliage de cuivre est mémorisé par les moyens de mémorisation.
- la ou chaque unité de contrôle est configurée pour déterminer le ou les débits de gaz circulant dans le premier conduit secondaire et/ou dans le second conduit secondaire véhiculant du gaz sous pression agencés en aval du dispositif régulateur de pression, à partir d'au moins une mesure de pression ayant été déterminée.
- la source de gaz contient de l'oxygène ou de l'air.

Selon certains modes de réalisation, le système de surveillance de l'invention peut aussi comprendre l'une ou plusieurs des caractéristiques suivantes :

- la ou chaque unité de contrôle coopère avec un module de télécommunication.
- la ou chaque unité de contrôle et le module de télécommunication sont configurés pour assurer une transmission de données, via ledit module de télécommunication, de l'unité de contrôle vers au moins une plateforme de traitement de données distante, lesdites données incluant au moins une pression de gaz déterminée par l'unité de contrôle.
- le réseau de distribution de gaz comprend des conduits de gaz agencées dans l'établissement hospitalier, en particulier sur les parois de l'établissement hospitalier, i.e. murs, cloisons ou analogues.
- les conduits de gaz ont un diamètre externe compris entre 10 et 50 mm, préférentiellement de l'ordre de 15 mm.
- les conduits de gaz ont un diamètre interne compris entre 12 et 14 mm, par exemple de 12.6 mm, 13 mm ou 13.6 mm.
- les conduits de gaz ont une épaisseur de paroi comprise entre 0.5 et 1.5 mm, par exemple de 0.7 mm, 1 mm ou 1.2 mm.
- le dispositif régulateur de pression est configuré pour contrôler la pression et garantir une pression, de préférence une pression stable, comprise entre 3 et 7 bar relatifs, de préférence environ entre 4 et 5 bar relatifs, avantageusement égale à 4 bar environ.
- les premier et second conduits secondaires ont des diamètres externes D2, D3 égaux, i.e. D2 = D3.
- les premier et second conduits secondaires ont des diamètres externes D2, D3 inférieurs au diamètre externe D1 du conduit de gaz principal, i.e. D2<D1 et D3<D1.
- les jauges de contrainte comprennent une jauge de référence et une ou des jauges additionnelles ou secondaires.
- chaque jauge de contrainte additionnelle est appairée à la jauge de contrainte de référence.
- les jauges de contrainte sont fixées à/sur la surface périphérique externe des conduits de gaz.
- l'unité de contrôle comprend au moins un microcontrôleur.
- le (chaque) microprocesseur ou microcontrôleur de la (chaque) unité de contrôle est agencé sur (au moins) une carte électronique.
- la (ou les) carte électronique est agencée dans la (ou les) unité de contrôle.
- chaque jauge de contrainte comprend une piste résistive déformable agencée sur un support comprenant des moyens de fixation permettant une fixation à la paroi périphérique externe d'un conduit de gaz.
- chaque jauge de contrainte comprend une piste résistive agencée sur un support, en particulier un support en silicone ou analogue.
- chaque jauge de contrainte comprend une piste résistive apte à se déformer, c'est-à-dire se rétracter ou se dilater, lors d'une déformation de la paroi du conduit de gaz sur lequel la jauge de contrainte est fixée.
- la plateforme de traitement de données distante comprend un serveur informatique, de préférence un serveur « cloud » ou analogue.
- le module de télécommunication est en outre configuré pour communiquer en réception avec un dispositif électronique à interface graphique configuré pour envoyer des données au module de télécommunication.
- le dispositif électronique est une tablette numérique, un téléphone multifonction ou un ordinateur portable, ou analogue.
- l'unité de contrôle est configurée pour déterminer, à partir de la valeur de résistivité R déterminée et d'une base de donnée donnant une correspondance entre pression et résistivité R, la pression gazeuse régnant dans lesdits conduits de gaz principal et secondaires véhiculant du gaz sous pression agencés en aval du dispositif régulateur de pression.

- l'unité de contrôle comprend les moyens de mémorisation pour mémoriser la valeur de résistivité de référence (Ro) et la base de donnée, ou d'autres données.
- les moyens de mémorisation comprennent une mémoire flash ou analogue.
- alternativement, la base de donnée est mémorisée au sein du processeur de la ou chaque unité de contrôle.
- la (ou les) unité de contrôle est configurée pour déterminer le ou les débits de gaz circulant dans le premier conduit secondaire et/ou dans le second conduit secondaire véhiculant du gaz sous pression agencés en aval du dispositif régulateur de pression, à partir d'au moins une mesure de pression.
- la plateforme de traitement de données distante est configurée pour commander un affichage sur un écran d'affichage, le ou les débits de gaz circulant dans le premier conduit secondaire et/ou dans le second conduit secondaire.
- les jauges de contrainte sont alimentées électriquement, en particulier leur piste résistive.
- la source de gaz comprend au moins un réservoir de stockage de gaz sous forme liquide ou gazeuse, en particulier de l'air ou de l'oxygène liquide (LOX).
- une unité de télémétrie est associé audit réservoir de stockage de gaz de manière à déterminer la quantité de gaz résiduel dans ledit réservoir de stockage de gaz, en particulier un niveau de LOX.
- l'unité de télémétrie est configurée pour transmettre à distance, via un réseau de télécommunication, à un fournisseur de gaz, les mesures de quantité de gaz résiduel, en particulier le niveau de LOX.
- un vaporiseur de gaz est agencé en sortie, i.e. en aval, dudit réservoir de stockage de gaz et configuré pour transformer le LOX en oxygène gazeux, notamment en réchauffant le LOX.
- l'extrémité aval du conduit principal se ramifie au moins en un premier tronçon ou premier conduit secondaire et en un second tronçon ou second conduit secondaire.
- le premier conduit secondaire comprend une pluralité de premières sous-ramifications.
- le second conduit secondaire comprend une pluralité de secondes sous-ramifications.
- au moins une partie des premières sous-ramifications et/ou des secondes sous-ramifications sont reliées à des prises murales de distribution de gaz, i.e. prises murales, en particulier des prises de fourniture d'oxygène gazeux ou d'air.
- la piste résistive de chaque jauge de contrainte est configurée pour que sa résistance ou résistivité R soit modifiée par rapport à une valeur résistive de repos $R_0$ proportionnellement à la déformation subie par la piste résistive considérée.
- la piste résistive de chaque jauge de contrainte est configurée pour être modifiée en compression ($R<R_0$) ou une tension ($R>R_0$).
- la valeur de la résistance ou résistivité R de la piste résistive de chaque jauge de contrainte est déterminée par l'unité de contrôle, typiquement par le processeur ou microcontrôleur.
- une source de courant électrique alimente en courant électrique, chaque unité de contrôle, en particulier une batterie, notamment rechargeable, ou le secteur (110/220V).
- la source de courant électrique alimente en outre en courant électrique, les jauges de contrainte et les modules de télécommunication.
- chaque jauge de contrainte est configurée pour être paramétrable (i.e. données de paramétrage) à distance via un dispositif indépendant comprenant une interface graphique et des moyens de communication, notamment une tablette numérique, un téléphone multifonction, un ordinateur ou analogue.
- le module de communication de chaque jauge de contrainte est configuré pour recevoir les données de paramétrage provenant du dispositif indépendant.
- les paramètres de chaque jauge de contrainte comprennent un identifiant unique (ID) de jauge de contrainte, le diamètre interne Di, du conduit de gaz sur lequel la jauge est agencée, une information de localisation relative par rapport à une jauge de contrainte de référence, une donnée d'appairage et/ou une donnée temporelle (i.e. horodatage).
- selon un autre mode de réalisation, le processeur de l'unité de contrôle est programmé pour inclure directement les paramètres de chaque jauge.
- elle comprend une jauge de contrainte de référence agencée dans la région du site de ramification du conduit principal.
- elle comprend des jauges de contrainte additionnelles agencées sur les premier et second conduits secondaires.
- chaque jauge de contrainte est configurée pour envoyer des données vers la plateforme de traitement sous forme d'ensembles ou de « paquets » de données.
- chaque ensemble ou paquet de données inclut au moins une valeur de pression.
- chaque ensemble ou paquet de données inclut une ou plusieurs données additionnelles choisies parmi une donnée temporelle (i.e. horodatage), un identifiant de jauge (ID), un diamètre des conduit de gaz, un identifiant de la jauge de contrainte de référence et une distance séparant la jauge de contrainte de référence et de la jauge de contrainte considérée.

- la plateforme de traitement est configurée pour opérer un prétraitement de toute ou partie des données provenant des jauges de contrainte, en particulier une resynchronisation des pressions mesurées par les jauges de contrainte.
- la plateforme de traitement est configurée pour opérer en outre un traitement de toute ou partie des données provenant des jauges de contrainte pour déterminer le ou les débits de gaz circulant dans le ou les conduits de gaz, en particulier dans le premier conduit secondaire et dans le second conduit secondaire.
- la plateforme de traitement est configurée pour commander un affichage d'au moins le ou les débits déterminées sur un écran d'affichage à destination d'un utilisateur, tel un opérateur de réseau, chargé de la surveillance efficace du réseau de distribution de gaz au sein de l'établissement hospitalier considéré.

Par ailleurs, l'invention concerne aussi une installation d'alimentation en gaz comprenant un réseau de conduits de distribution de gaz en alliage de cuivre, qui est agencé au sein d'un établissement hospitalier, tel un hôpital ou analogue, et qui sert à véhiculer du gaz sous pression, ledit réseau de distribution de gaz comprenant le conduit de gaz principal se ramifiant en les conduits de gaz secondaires, laquelle installation comprend en outre un système de surveillance du réseau de distribution selon l'invention, en particulier un système de surveillance tel que décrit ci-avant.

Le réseau de conduits de distribution de gaz de l'installation d'alimentation en gaz comprend le premier conduit secondaire se sous-divisant en des premières sous-ramifications et le second conduit secondaire se sous-divisant en des secondes sous-ramifications.

Les premières sous-ramifications et/ou des secondes sous-ramifications sont reliées à des prises murales de distribution de gaz.

L'invention va maintenant être mieux comprise grâce à la description détaillée suivante, faite à titre illustratif mais non limitatif, en référence aux figures annexées parmi lesquelles :

Fig. 1 schématise une installation d'un système de surveillance selon l'invention d'un réseau de distribution de gaz médicaux d'un établissement hospitalier alimenté par une source de gaz et comprenant des jauges de contrainte.
Fig. 2 schématise une jauge de contrainte de l'installation de Fig. 1 permettant de mesurer de façon non-invasive la pression locale régnant dans un conduit délivrant du gaz médical.

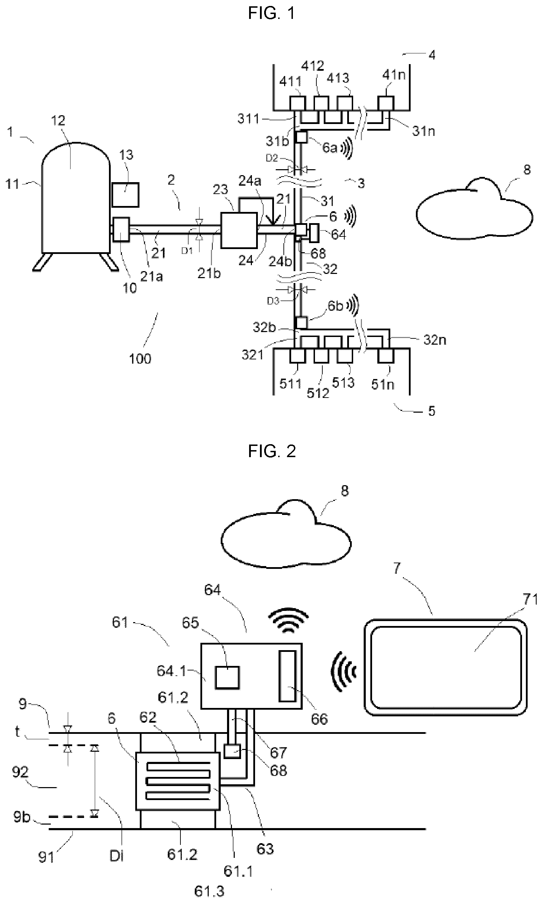

Fig. 1 schématise un mode de réalisation d'un système de surveillance d'un réseau de distribution de gaz médicaux selon l'invention, agencé sur une installation d'alimentation en gaz 100, i.e. de fourniture de gaz sous pression, agencée au sein d'un établissement hospitalier, lequel réseau est alimenté par une source de gaz 1, à savoir ici un réservoir 11 de stockage d'$O_2$ sous forme liquide et/ou gazeuse stocké dans son volume intérieur 12.

Une unité de télémétrie 13 mesure en permanence le niveau d'$O_2$ liquide dans le réservoir de stockage 11 et transmet à distance, via un réseau de communication, tel que GSM, internet ou autre, les mesures de niveau d'$O_2$ liquide à un fournisseur de gaz afin de l'alerter lorsqu'un seuil bas prédéfini est atteint pour qu'il vienne remplir à nouveau le réservoir de stockage 11 avec de l'oxygène liquide amené par camion-citerne ou analogue.

Afin de transformer l'oxygène liquide en oxygène gazeux, on met en œuvre un vaporiseur de gaz 10 qui est agencé en aval du réservoir de stockage 11. La sortie du vaporiseur de gaz 10 est reliée fluidiquement à une entrée 21a d'une portion amont 21 d'un conduit d'alimentation principal 2, c'est-à-dire une canalisation de gaz principale, de manière à l'alimenter en oxygène gazeux. La portion amont 21 de premier diamètre D1 alimente quant à elle (en 21b) un régulateur de pression 23, tel un dispositif détendeur de gaz, agencé sur le conduit d'alimentation principal 2 et relié fluidiquement à une sortie 21b de la portion amont 21. Préférentiellement, le premier diamètre D1 est égal à plusieurs dizaines de millimètres, par exemple d'au moins 40mm.

Le régulateur de pression 23 est relié par ailleurs à une extrémité amont 24a d'une portion aval 24 du conduit de gaz principal 2 afin de lui fournir de l'oxygène gazeux à pression donnée. Autrement dit, le régulateur de pression 23 garantit, i.e. fournit, une pression stable dans la portion aval 24 du conduit principal 2, dite « pression nominale de service ». Avantageusement, la pression nominale de service est comprise environ entre 4 et 5 bar relatifs, par exemple égale à 4 bar environ.

L'extrémité aval 24b de la portion aval 24 du conduit principal 2 vient se ramifier (en 24b), i.e. se diviser, en un premier tronçon ou premier conduit secondaire 31 ayant un second diamètre D2 et, par ailleurs, en un second tronçon ou second conduit secondaire 32 ayant un troisième diamètre D3.

Le conduit principal 2 et les premier et second conduits secondaires 31, 32 forment tout ou partie du réseau de distribution de gaz de l'établissement hospitalier, servant notamment à alimenter en gaz, des prises murales, comme expliqué ci-après. Dans le cadre de l'invention, les termes « conduit » et « conduite » sont considérés comme équivalents et substituables.

Les premier et second conduits secondaires 31, 32 forment un circuit de gaz secondaire 3. Ils ont des diamètres D2, D3 préférentiellement égaux, par exemple de l'ordre de 15 mm environ. Selon un mode de réalisation, on a : D2<D1 et D3<D1.

Le premier conduit secondaire 31 présente lui-même une pluralité de sous-ramifications 311-31n, respectivement, formant des lignes de gaz débouchant au niveau de prises d'oxygène murales 411 à 41n, respectivement, situées dans un service 4 de l'établissement hospitalier, par exemple un service de réanimation. L'oxygène gazeux circulant dans le premier conduit secondaire 31 est donc distribué à tout ou partie des sous-ramifications 311-31n selon que les prises d'$O_2$ murales 411-41n sont en fonctionnement ou au repos, c'est-à-dire raccordées ou non à des dispositifs médicaux utilisant de l'oxygène, tels que débitmètres, ventilateurs mécaniques, dispositifs de délivrance d'oxygène à haut débit.... De façon similaire, le second conduit secondaire 32 alimente lui aussi une pluralité de sous-ramifications 321-32n, c'est-à-dire des lignes de gaz aboutissant elles aussi à des prises d'$O_2$ murales 421-42n situées dans un autre service 5 de l'établissement hospitalier, par exemple un service de soins légers.

La pression gazeuse s'exerçant au niveau des prises murales ne doit pas être inférieure à 90% de la pression nominale de service (e.g. 4 bar relatif), donc ici d'au moins 3.6 bar relatif, lorsque le réseau de distribution de gaz médicaux fonctionne dans les limites de sa gamme opérationnelle, afin de ne pas risquer que les dispositifs médicaux connectés aux prises murales 411-41n, 321-32n dysfonctionnent et mettent en danger les patients.

La gamme opérationnelle des prises murales doit donc être déterminée en prenant compte le type de service muni de prises murales (e.g. urgences, réanimation, soins légers...), le taux d'utilisation estimé des prises murales (par exemple 75% d'utilisation) et le débit de gaz consommé au travers de chacune des prises murales en fonctionnement.

Par exemple, en considérant le premier conduit secondaire 31, pour n (n>2) prises d'$O_2$ murales 411-41n d'un service de réanimation, on peut déterminer que 75% des prises sont utilisées à un instant donné, pour un débit moyen de 20 L/min. Ainsi, pour 20 prises (n=20), on peut envisager un débit total circulant dans le premier conduit secondaire 31 de l'ordre de 300 L/min maximum. En considérant ce débit maximum et la longueur du premier conduit secondaire 31, par exemple de plusieurs mètres à plusieurs dizaine de mètres, défini entre l'extrémité 24b de la portion aval 24 et l'extrémité aval 31b de ce premier conduit secondaire 31, on peut déterminer qu'un diamètre D2 de 15mm devrait permettre à respecter les exigences de la norme ISO 7396-1, en particulier une pression régnant à l'extrémité aval 31b du premier conduit secondaire 31 supérieure de 90% à la pression nominale de service (ici 3.6 bar relatif).

Il en va de même pour le dimensionnement du second conduit secondaire 32 alimentant quant à lui un service de soins légers 5, pour lequel on détermine qu'un débit total maximal de 320 L/min pourra également être observé (i.e. 100 prises à 80% à 4L/min par exemple) et ce, pour un diamètre D3 du second conduit secondaire 32 également de 15 mm.

Dans des conditions non-habituelles ou exceptionnelles, par exemple un afflux de patients COVID...ou autre, d'une part, le taux d'occupation des prises d'$O_2$ murales 411- 41n peut se retrouver à 100 et, d'autre part, pour optimiser la prise en charge des patients considérés, leur oxygénation doit être assurée par des dispositifs de délivrance d'oxygène à haut débit gourmands en $O_2$, par exemple utilisant 60 L/min, voire plus.

Il s'ensuit alors un débit total circulant dans le premier conduit secondaire 31 d'environ 420 L/min, donc bien supérieur au débit maximal initialement escompté. Or, la chute de pression entre l'extrémité 2b de la portion aval 24 et l'extrémité aval 31b du premier conduit secondaire 31 évolue selon le carré du débit circulant entre ces deux points. Elle devient donc très inférieure à la pression minimale de 3.6 bar, ce qui engendre des dysfonctionnements des dispositifs médicaux connectés aux différentes prises d'$O_2$ murales 411-41n du service de réanimation 4 considéré.

On comprend alors l'importance de pouvoir opérer une surveillance efficace du réseau de distribution de gaz, en particulier du premier conduit secondaire 31 et du second conduit secondaire 32, pour permettre de détecter toute saturation des conduits et d'avertir, le cas échéant, un opérateur, par exemple le responsable technique supervisant le réseau de distribution de gaz médicaux, de l'imminence d'une telle saturation de l'un et/ou l'autre de ces conduits.

Selon l'invention, on évite les problèmes liés à l'insertion de capteurs de débits dédiés dans le réseau de distribution de gaz médicaux des installations hospitalières existantes qui obligent à interrompre les conduits du réseau pendant la durée de l'intervention, donc ne permet pas d'assurer une continuité de l'approvisionnement en gaz des patients.

Pour ce faire, on met en œuvre un ensemble de capteurs non-invasifs 61, c'est-à-dire des jauges de contrainte 6, au sein de l'installation 100, lesquels font partie d'un système de surveillance selon l'invention.

Ainsi, Fig. 2 schématise le principe de l'agencement de telles jauges de contrainte 6, préférentiellement des jauges connectées, sur un conduit de gaz 9 d'une installation hospitalière d'acheminement de gaz, telle l'installation 100 de Fig. 1 selon l'invention.

La (chaque) jauge de contrainte 6 est reliée électriquement à une unité de contrôle 64, en particulier une (des) carte électronique 64.1 à microprocesseur 65, tel un microcontrôleur, via un câble de connexion 63 électriquement.

La jauge de contrainte 6 comprend un support 61.1, tel un substrat en silicone, ou analogue portant une piste résistive 62 déformable. Cette piste résistive 62 est apte à se déformer, c'est-à-dire se rétracter ou se dilater, sous l'action d'une contrainte mécanique, notamment en cas de déformation de la paroi 90 du conduit de gaz 9 sur lequel elle est fixée, en particulier sous l'effet d'une pression de gaz interne.

Les déformations de la piste résistive 62 modifient sa résistance R (aussi appelée résistivité) par rapport à une valeur résistive de repos $R_0$ en fonction de la déformation subie, c'est-à-dire selon que la piste résistive 62 subit une compression ($R<R_0$) ou une tension ($R>R_0$). La valeur de la résistance R de la piste résistive 62 de la jauge de contrainte 61 est déterminée par l'unité de contrôle 64, typiquement par le processeur 65 ou microcontrôleur, agencé sur la carte électronique 64.1.

La détermination de la valeur de résistance R de la piste résistive 62 est usuellement réalisée au moyen d'un pont de Wheatstone (https://en.wikipedia.org/wiki/Wheatstone_bridge) piloté par le microprocesseur 65 et la carte électronique 64.1.

Selon un mode de réalisation, l'installation 100 comprend en outre un module de télécommunication 66 configuré pour opérer des émissions et/ou des réceptions de données, i.e. informations ou autres. Le module de télécommunication 66 est préférentiellement intégré à la carte électronique 64.1.

Plus précisément, le module de télécommunication 66 est configuré pour communiquer en réception avec un dispositif électronique 7 indépendant comprenant une interface graphique 71, telle une tablette numérique, un téléphone multifonction (smartphone), un ordinateur portable ou analogue.

Ce dispositif électronique 7 est configuré pour envoyer des données au module de télécommunication 66. Lorsque le module de télécommunication 66 reçoit ces données, il les retransmet ou les transfère à l'unité de contrôle 64 qui les traite. Ces données servent notamment à paramétrer la ou les jauges de contraintes 6.

Le module de télécommunication 66 est aussi en capacité d'émettre des données, par exemple par voie cellulaire ou autre, par exemple via un protocole de communication de type LoRa ou analogue, lesquelles données peuvent ensuite être captées par exemple par une borne de réception (non représentée) faisant office de relai de communication. Avantageusement, une fois reçues, ces données peuvent être traitées sur une plateforme de traitement de données 8 distante, tel un serveur informatique de type « cloud » ou analogue, puis fournies, une fois traitées, par exemple agrégées, à un opérateur, par exemple le responsable technique du réseau de distribution de gaz médicaux considéré, en particulier affichées sur un écran d'affichage à l'attention de l'opérateur.

La carte électronique 64.1 de l'unité de contrôle 64 est alimentée en courant électrique par une batterie ou par le secteur (110/220V), ce qui permet d'alimenter et contrôler les différents composants nécessitant de l'être, en particulier la jauge de contrainte 61, l'unité de contrôle 65 et le module de télécommunication 66.

La jauge de contrainte 6 est fixée sur la surface périphérique externe 91 du conduit de gaz 9 par un dispositif ou des moyens de fixation 61.2 adaptés, par exemple un collier, des clips ou autres, qui sont solidarisés à la jauge de contrainte 6 par collage, soudage ou autre, en particulier solidaires du support déformable 61.1 portant la piste résistive 62.

Le conduit 9 est typiquement un conduit en cuivre véhiculant un gaz médical, tel de l'$O_2$. Il a par exemple un diamètre externe de l'ordre de 15 mm et une épaisseur de paroi de l'ordre de 1mm. Les diamètres des conduits de gaz médicaux sont normés (EN 13348) et il n'existe dès lors qu'un nombre limité de diamètres possibles, parmi lesquels le diamètre de 15mm est le plus utilisé pour les conduits secondaires des réseaux hospitaliers.

Le gaz médical, ici de l'$O_2$, circule à une pression P donnée, par exemple de plusieurs bars relatifs, e.g. 4 bars, dans le conduit interne 92 ou lumen du conduit 9.

La paroi 90 du conduit 9 va se déformer proportionnellement à la pression du gaz qu'il convoie, c'est-à-dire que le diamètre D du conduit 9 croit proportionnellement à la pression gazeuse P régnant dans le passage interne 92 du conduit 9. Le taux de déformation dépend non seulement de la pression gazeuse P dans le conduit 9 mais aussi du diamètre D et de l'épaisseur E de la paroi 90 du conduit 9, ainsi que des propriétés mécaniques du matériau du conduit 9, e.g. du cuivre (cf. module d'Young et coefficient de Poisson).

Plus précisément, la relation liant la pression gazeuse P à un conduit donné répond à la formule suivante :

$$P = \frac{8.E.\Delta Di.t}{Di^2.(2-v)}$$

- *P* est la pression en Pa
- *E* est le module d'Young en GPa
- *Di* est le diamètre interne du conduit en mm
- $\Delta Di$ est la déformation du conduit, mesurée par les jauges
- *t* est l'épaisseur de la paroi du conduit en mm
- *v* est le coefficient de Poisson, i.e. constant à 0.34 pour les alliages de cuivre.

Comme expliqué ci-avant, tout réseau de distribution de gaz dans un établissement hospitalier doit répondre à des normes spécifiques, telle que la norme NF EN-13348 qui requiert l'utilisation de tubes de différents diamètres et d'épaisseur de paroi du tube, ainsi qu'un alliage de cuivre spécifique, typiquement l'alliage Cu-DHP pour les conduits des réseaux hospitaliers. L'alliage de cuivre Cu-DHP (pour *Phosphorus-Deoxidized Copper*) est un alliage de cuivre désoxydé au phosphore. Il contient une teneur en phosphore habituellement entre 0,013% et 0,040%.

Ainsi, concernant les diamètres internes/externes et l'épaisseur de paroi du conduit considéré, pour un tube de 15 mm de diamètre extérieur, l'épaisseur de paroi peut être égale, selon NF EN-13348, à 0.7 mm, 1 mm ou 1.2 mm, ce qui correspond à un diamètre interne Di de 13.6 mm, 13 mm ou 12.6 mm, respectivement.

Les informations de diamètre externe et d'épaisseur de paroi d'un conduit de réseau hospitalier sont normativement indiquées sur leur surface externe (voir EN-13348). On peut alors en déduire le diamètre interne Di.

Ces paramètres dimensionnels (diamètres externe et/ou interne et épaisseur de paroi) peuvent être utilisés lors du paramétrage des jauges de contraintes et mémorisés au sein de l'unité de contrôle 64, par exemple au sein de moyens de mémorisation de l'unité 64, notamment au sein de son processeur ou d'une mémoire dédiée, telle une mémoire flash.

Lorsqu'il est soumis à des variations de pression, le conduit 9 (i.e. sa paroi 90) se déforme, en compression ou en tension et ces déformations se propagent, de manière (quasi-) instantanée, à la piste résistive 62 de la jauge de contrainte 6, notamment au travers de la paroi 90 du conduit 9 et des moyens de fixation 61.2, laquelle piste résistive 62 se déforme alors aussi en corrélation avec ces variations de pression.

Autrement dit, dès que la jauge de contrainte 6 est installée sur le conduit 9 et que celui-ci est soumis à une pression gazeuse interne, la piste résistive 62 de la jauge de contrainte 6 est mise en tension du fait de l'expansion du conduit 9 sous l'effet de la pression.

L'unité de contrôle 64, en particulier le processeur 65, va alors pouvoir en déterminer la valeur résistive R, laquelle est supérieure à la valeur résistive de repos $R_0$ de la piste résistive 62, c'est-à-dire une valeur de résistance de référence $R_0$.

Puis, l'unité de contrôle 64 détermine, à partir de la valeur de résistance R déterminée et d'une base de donnée mémorisée, la pression gazeuse P régnant dans le conduit de gaz 9, par exemple véhiculant de l'oxygène médical.

Préférentiellement, la base de donnée est obtenue préalablement, par exemple lors du processus de fabrication de la jauge 6 ou ultérieurement via des tests de routine, en réalisant une corrélation entre des valeurs résistives R de la piste résistive 62 et différents diamètres de conduits de gaz soumis à différentes pressions P, occasionnant donc des déformations plus ou moins importantes, par exemple des pressions de 0 bar relatif (i.e. pression atmosphérique) à 10 bar relatifs. $R_0$ désigne la valeur de résistance correspondant à un conduit de gaz soumis à la pression atmosphérique (1 atm = 0 bar relatif).

Par exemple, tous les conduits référencés dans NF EN-13348, c'est-à-dire de différents diamètres et d'épaisseur de paroi, peuvent être utilisés pour constituer la base de donnée et faire de celle-ci une base de donnée exhaustive.

On constate, qu'en plus des données dimensionnelles du conduit, i.e. diamètre interne *Di* et épaisseur de paroi t, la formule de calcul ci-dessus inclut le module d'Young, qui représente la rigidité d'un matériau à l'élongation (qui s'apparente à une « élasticité ») intervient.

Or, la valeur de ce coefficient dépend de l'alliage considéré, par exemple un alliage de cuivre. Par exemple, l'alliage Cu-DHP, qui est généralement utilisé pour les conduits hospitaliers, a un module d'Young d'environ 130 GPa à 20°C, tandis que l'alliage CW114C a un module d'Young d'environ 120 GPa à 20°C, ce qui peut se traduire par une erreur de pression de 10% sur la mesure de pression régnant dans le conduit.

Dès lors, il est nécessaire que la base de donnée soit réalisée sur des conduits ayant l'alliage spécifié dans NF EN-13348, i.e. CuDHP, afin que la relation entre la déformation sous pression d'un conduit donné soit la plus précise possible.

On verra plus tard l'intérêt que la base de donnée constituée soit faite dans une condition de température contrôlée, par exemple à 20°C et que cette température $T_0$ soit mémorisée au sein de l'unité de contrôle 64, par exemple au sein de moyens de mémorisation de l'unité 64.

De façon synthétique, en fonction d'un conduit donné (diamètre interne *Di* et épaisseur de paroi t), à une température contrôle T0 donnée, la base de donnée relie une mesure de déformation dudit conduit (étant représentée par la valeur résistive R mesurée) à la pression P régnant dans ledit conduit.

La base de donnée est préférentiellement intégrée, c'est-à-dire mémorisée, directement au sein du processeur 65 de l'unité de contrôle 64, ou, selon le cas, dans une mémoire dédiée, telle une mémoire flash, coopérant avec le processeur 65.

Avantageusement, après agencement sur le conduit de gaz 9, la jauge de contrainte 6 qui est connectée, c'est-à-dire (télé)communicante, est préférentiellement paramétrée via l'interface graphique 71 du dispositif indépendant 7, telle une tablette numérique ou analogue. Les données de paramétrage sont ensuite transmises à distance par les moyens de communication de la tablette ou analogue vers le module de communication 66, comme déjà expliqué.

L'installation 100 de Fig. 1 intégrant un système de surveillance selon l'invention comprend préférentiellement plusieurs jauges de contrainte 6, 6a, 6b afin de surveiller différents points du réseau de gaz, typiquement une jauge de contrainte de référence 6 et plusieurs jauges de contrainte 6a, 6b additionnelles ou secondaires.

Dans ce cas, les paramètres de chaque jauge de contrainte 6, 6a, 6b, c'est-à-dire les données de paramétrage, provenant du dispositif 7 de type tablette numérique ou analogue, peuvent être fixés ou sélectionnés par un opérateur et comprennent un identifiant unique (ID) de chaque jauge de contrainte 6, 6a, 6b, le diamètre Di du conduit de gaz sur lesquels elles sont installées, une information de localisation relative de la jauge de contrainte de référence 6 et des jauges de contrainte 6a, 6b additionnelles, des données d'appairage des jauges de contrainte, voire d'autres informations utiles, en particulier des données temporelles, c'est-à-dire un horodatage.

Selon un autre mode de réalisation, le processeur 65 de l'unité de contrôle 64 est programmé pour inclure directement les paramètres de chaque jauge, tel que son identifiant (ID) unique, le diamètre interne Di du conduit de gaz auquel la (ou les) jauge de contrainte est fixée, et/ou les autres paramètres, notamment ceux décrits ci-après servant à améliorer la précision de mesure/détermination des pressions et débit.

Une fois la valeur de pression P déterminée, l'unité de contrôle 64 est configurée pour transmettre cette pression, ainsi que l'horodatage et l'identifiant unique de la jauge considérée, le diamètre D du conduit de gaz 9, l'appairage à d'autres jauges de contrainte et l'information de localisation, à une plateforme informatique 8 distante pour traitement et exploitation ultérieure des informations. La télétransmission des données peut se faire à une fréquence donnée, par exemple toutes les 10 millisecondes ou à une autre fréquence adaptée.

Autrement dit, Fig. 1 selon l'invention schématise une intégration dans une installation 100 hospitalière comprenant un réseau de conduits de distribution de gaz médicaux, d'un système de surveillance comprenant plusieurs jauges de contrainte connectées 6, 6a, 6b, conformément à Fig. 2, sur le circuit secondaire 3 du réseau de distribution de gaz médicaux hospitalier.

Ces jauges de contrainte connectées 6, 6a, 6b sont agencées ici à titre d'exemple dans la région du site de ramification 24b du conduit principal 21 et par ailleurs sur les premier et second conduits secondaires 31, 32, afin d'y mesurer la distribution des débits gazeux. Elles fonctionnent comme celle décrite ci-avant, en référence à Fig. 2 ; toutefois, elles pourraient être agencées à d'autres endroits du réseau.

Ces jauges de contrainte 6, 6a, 6b, en particulier les processeurs 65 de (ou des) unité(s) de contrôle 64 associée(s) à ces jauges de contrainte 6, 6a et 6b, ont été paramétrées par exemple via le dispositif 7 à interface graphique 71, telle une tablette numérique ou analogue. Ces jauges de contrainte 6, 6a, 6b, ou plus précisément les processeurs 65, envoient préférentiellement chacune l'ensemble des données susmentionnées vers la plateforme informatique 8 de traitement de données.

Comme illustré en Fig. 1, la jauge de contrainte 6 principale, qui sert de jauge de référence, peut être installée sur le réseau secondaire 3 au niveau de l'extrémité aval de la portion aval 24 du conduit principal 21, par exemple au niveau de sa ramification (en 24b) en lesdits premier et second conduits secondaire 31, 32 ou sur le tronçon ou portion aval 24 du conduit principal 21. Par ailleurs, la première jauge de contrainte additionnelle 6a est agencée au niveau de l'extrémité aval 31b du premier conduit secondaire 31, et la seconde jauge de contrainte additionnelle 6b est quant à elle installée au niveau de l'extrémité aval 32b du second conduit secondaire 32. Autrement dit, la jauge de contrainte 6 principale est agencée ici entre les jauges de contrainte additionnelles 6a, 6b.

Lors du paramétrage des jauges de contrainte 6, 6a, 6b, les diamètres Di2, Di3, qui sont identiques, par exemple de l'ordre de 13 mm, sont renseignés (en plus de l'épaisseur de paroi des conduits sur lesquelles elles sont placées) via la tablette numérique ou tout dispositif 7 similaire, ce qui permet de déterminer la pression locale régnant dans le conduit secondaire 3 au niveau des sites de localisation des jauges de contrainte 6, 6a, 6b.

A titre d'exemple, l'envoi des données relatives à chacune des jauges de contrainte connectées 6, 6a, 6b vers la plateforme de traitement 8 peut se faire sous forme de paquets de données :

- Jauge de référence 6 : [T, J1, Di1, P1, 0, 0]
- Première jauge additionnelle 6a : [T, J2, Di2, P2, RefJ1, L1]
- Seconde jauge additionnelle 6b : [T, J3, Di3, P3, RefJ1, L2]

où :

- T est une donnée temporalle, c'est-à-dire un horodatage, par exemple de la forme JJ/MM/AA XXhXXminXXsXXms.
- J1, J2, J3 sont les identifiants (ID) uniques des jauges 6, 6a, 6b.
- Di1, Di2, Di3 sont les diamètres internes des conduits de gaz médical sur lequel les jauges 6, 6a, 6b sont installées.
- P1, P2, P3 sont les pressions locales régnant dans les conduits au niveau des jauges 6, 6a, 6b considérées.
- RefJ1 est l'identifiant de la jauge de contrainte de référence 6 (ID = J1) à laquelle les jauges de contrainte additionnelles 6a, 6b sont appairées.
- L1, L2 sont les distances (en mètres) séparant les jauges de contrainte additionnelles 6a, 6b de la jauge de référence 6.

La jauge de contrainte de référence 6 étant le point de référence pour les jauges de contrainte additionnelles 6a, 6b, elle n'est appairée à aucune autre jauge de contrainte connectée, donc son appairage est désigné par « 0 » et sa localisation relative est aussi désignée par « 0 » dans le paquet de données qui la concerne.

A titre d'exemple illustratif, on considère que la pression au niveau de la jauge de contrainte 6 de référence, c'est-à-dire régnant à l'extrémité aval 24b de la portion aval 24, est de 4.5 bar, alors que la pression régnant dans le premier conduit secondaire 31 au niveau de la jauge de contrainte 6a est de 4.2 bar, et celle régnant dans le second circuit secondaire 32 au niveau de la jauge de contrainte 6b est de 3.8 bar.

Comme expliqué ci-avant, les jauges de contrainte 6, 6a et 6b vont voir leur piste résistive 62 refléter une valeur résistive conforme à la déformation liée à la pression, des différents conduits sur lesquels les jauges de contrainte 6, 6a et 6b sont agencées. Les processeurs 65 de l'unité de contrôle 64 associés au différentes jauges de contrainte 6, 6a et 6b sont alors en mesure de transformer les différentes valeurs résistives des pistes résistives 62 en pression, soit une pression de 4.5 bar pour la jauge de contrainte 6, une pression de 4.2 bar pour la jauge de contrainte 6a, et une pression de 3.8 bar pour la jauge de contrainte 6b.

Si la distance entre la jauge de contrainte 6 de référence et la première jauge de contrainte 6a est de 50 mètres, et celle entre la seconde jauge de contrainte 6 et la jauge de contrainte 6b est de 30 mètres, les électroniques, i.e. processeurs 65 des unités de contrôle 64, des jauges de contrainte 6, 6a et 6b vont envoyer à une fréquence donnée, par exemple toutes les 10ms, des « paquets » ou ensembles de données vers la plateforme de traitement 8, tel un serveur informatique distant, comme illustré dans Tableau 1 suivant.

Tableau 1

| Jauge | Horodatage | ID | Di (mm) | P (bar) | Réf. | L (m) |
|---|---|---|---|---|---|---|
| 6 | 14/4/2000 10h40mn37s150ms | J1 | 13 | 4.5 | 0 | 0 |
| 6a | 14/4/2000 10h40mn37s150ms | J2 | 13 | 4.2 | J1 | 50 |
| 6b | 14/4/2000 10h40mn37s150ms | J3 | 13 | 3.8 | J1 | 30 |

Lors de la réception de ces ensembles de données au niveau de la plateforme de traitement 8, il est possible d'en extraire les débits circulant respectivement dans les premier et second conduits secondaires 31, 32.

En effet, tout débit circulant dans le diamètre interne Di d'un conduit donné entraine une perte de charge qui est fonction de la nature du media (dans l'exemple ici de l'$O_2$ gazeux), du diamètre du conduit, de la longueur du conduit et du débit circulant dans le conduit considéré.

Ainsi, connaissant la nature du gaz (i.e. oxygène) circulant dans le premier conduit secondaire 31, la différence de pression entre les jauges de contrainte connectées 6, 6a, le diamètre Di2 du premier conduit secondaire 31 et la longueur séparant les jauges de contrainte connectées 6, 6a, il est possible de déterminer le débit circulant dans le premier conduit secondaire 31 en appliquant l'Equation de Darcy-Weisbach par exemple. Voir par exemple le site Wikipédia qui rappelle cette Equation : https://en.wikipedia.org/wiki/Darcy%E2%80%93Weisbach_equation).

Avantageusement, on peut opérer un prétraitement sur la plateforme de traitement 8 en resynchronisant les pressions mesurées par les jauges de contrainte connectées 6, 6a.

En effet sous l'action d'un débit instantané, la propagation de l'onde de pression d'un point A à un point B ne se fait qu'à la vitesse du « son ». Si un débit instantané fixe, par exemple 100L/min, apparait au niveau de la jauge de contrainte connectée 6 de référence, la pression chute au niveau de la jauge de contrainte additionnelle 6a pour atteindre une valeur stable, après que l'onde sonore a voyagé entre les jauges de contrainte 6, 6a considérées. La distance séparant ces jauges étant ici de 30 mètres et la vitesse du son étant d'environ 330 m/s, la pression au niveau de la jauge de contrainte connectée 6a s'établit après un temps de latence de 90 millisecondes (msec) environ. Lors de la resynchronisation des pressions, le ou les algorithmes de traitement déployés sur la plateforme de traitement 8 tiennent compte de ce temps de latence entre les jauges de contrainte appairées afin de ne pas retourner des valeurs erronées de débit circulant dans le réseau de distribution de gaz médicaux.

En exploitant les données retournées par des jauges de contrainte 6, 6a, 6b, il est possible de déterminer, dans la plateforme 8, les débits circulant dans le premier conduit secondaire 31 et dans le second conduit secondaire 32. Ces débits et les autres données (IDs, pression...) peuvent ensuite être affichées sur un écran d'affichage à destination d'un utilisateur, tel un opérateur de réseau, chargé de la surveillance efficace du réseau de distribution de gaz au sein de l'établissement hospitalier considéré.

L'estimation des débits circulant dans les portions du réseau de distribution de gaz médicaux ne se limite pas à des portions droites, i.e. linéaires. En effet, l'équation transformant une perte de charge en un débit peut prendre en compte d'éventuels changement de section, une présence de coudes...

Utiliser des jauges de contrainte fixées aux conduits de gaz du réseau est avantageux car leur installation sur les réseaux existants ne nécessite pas d'interrompre les conduits du réseau de l'installation hospitalière et ce, quels que soient les sites du réseau choisis pour leur installation, et permet donc d'assurer une continuité d'approvisionnement en gaz, en particulier une fourniture d'oxygène aux patients en ayant besoin.

A partir des informations/données recueillies et/ou calculées, il est possible de déterminer et d'afficher un score, par exemple un taux de saturation de chacune des portions d'un réseau de distribution de gaz médicaux considéré, afin d'alerter de l'imminence d'une saturation du réseau et donc permettre à l'opérateur de prendre des mesures protectrices adaptées.

Autrement dit, l'invention repose sur une utilisation de jauges de contraintes agencées sur la surface extérieure des conduits de gaz d'un réseau de distribution de gaz au sein d'un établissement hospitalier afin d'assurer une surveillance de ce réseau de distribution de gaz et d'estimer la pression et ensuite le débit dans lesdits conduits.

Par ailleurs, on constate aussi que l'expansion thermale du cuivre peut aussi influer sur le calcul de pression, comme il ressort de la formule ci-avant.

En effet, l'alliage Cu-DHP présente une expansion de 17.7 $\mu$m/(m °C). Autrement dit, pour 1 mètre de cuivre, une déformation de 17.7 $\mu$m est à prévoir par degré Celsius. La déformation va dans le sens de la rétractation pour une variation négative de 1°C et d'un allongement pour une variation positive de 1°C.

Ainsi, en prenant pour exemple un conduit de 13 mm de diamètre interne Di à 20°C (i.e. 1 mm d'épaisseur de paroi), on obtient une déformation de ce diamètre interne de 0.3 $\mu$m pour une variation de pression de 1 bar, alors qu'une déformation du diamètre interne de 0.23 $\mu$m est attendue pour une variation de 1°C.

On comprend que la déformation n'est pas forcément négligeable et doit préférentiellement être compensée pour affiner les calculs de pression.

Etant donné que l'expansion est étroitement liée à la température à laquelle est soumis le conduit considéré, selon l'invention, on agence des moyens de mesure de température 68, typiquement un capteur de température ou analogue, sur la surface externe du conduit de gaz considéré, comme illustré en Fig. 2, et on les relie à l'unité de contrôle 64, par exemple via un câble de connexion 67 ou analogue, afin qu'ils lui fournissent les mesures de pression qu'ils opèrent.

La fixation du capteur de température, i.e. des moyens de mesure de température 68, sur la surface externe du conduit de gaz 9 peut être faite par collage d'une pâte thermique ou par toute autre technique de fixation adaptée.

Par exemple, le capteur de température de référence LMT70A disponible auprès de la société Texas Instrument.

On mémorise par ailleurs au sein de l'unité de contrôle 64 le coefficient d'expansion thermique relatif à l'alliage de cuivre considéré, ici 17.7 $\mu$m/(m °C) pour l'alliage Cu-DHP.

En fonction des caractéristiques du conduit (diamètre interne, épaisseur de paroi), le microprocesseur 65 de l'unité de contrôle 64 est alors en capacité d'exploiter la mesure de température et compenser l'effet de la température sur la déformation du conduit en utilisant cette valeur de température pour compenser la résistivité déterminée à partir de la table de référence mémorisée, comme expliqué ci-avant.

En reprenant l'exemple de la jauge 6a, qui est installée sur un conduit de diamètre interne Di2 de 13mm et d'épaisseur de paroi de 1mm, la pression réelle dans le conduit est de 4 bar. Le microprocesseur 65 de l'unité de contrôle 64 mesure une valeur résistive R qui, selon la base de donnée, correspond à une pression de 7.6 bar.

Or, cette valeur résistive R peut être représentée par deux composantes, à savoir la composante $R_P$ qui est liée à la pression régnant dans le conduit, laquelle induit une déformation du conduit, et celle résultant de la dilatation (ou rétractation) thermique $R_T$ par rapport à la température de référence $T_0$ utilisée lors de la constitution de la base de données, par exemple $T_0 = 20°C$.

Schématiquement, on a donc : $R = R_P + R_T$.

La composante $R_T$ est indésirable et doit être compensée pour ne considérer que la valeur de résistivité $R_P$ due à la pression.

Pour ce faire, le microprocesseur 65 de l'unité de contrôle 64 procède à la mesure de température T régnant au niveau du conduit, via les moyens de mesure de température 68. Par exemple, la température T peut être égale à 21°C par exemple, donc considérée comme étant supérieure de 1°C à la température de référence $T_0$ mémorisée (i.e. 20°C).

Par ailleurs, la valeur ou coefficient d'expansion thermique de l'alliage utilisé, par exemple 17.7 $\mu$m/(m °C) ici pour l'alliage Cu-DHP, étant mémorisée au sein de l'unité de contrôle 64, en connaissant la différence entre la température T et la température de référence mémorisée $T_0$, le microprocesseur 65 de l'unité de contrôle 64 est en capacité de transformer cette différence de température en une déformation.

Le microprocesseur 65 peut alors déterminer que l'effet de la température ambiante engendre une valeur de résistivité $R_T$ et peut dès lors retrancher cette valeur de résistivité $R_T$ de la valeur de résistivité R mesurée de manière à déterminée la valeur de résistivité $R_T$. La valeur de résistivité corrigée retenue est donc égale uniquement à celle engendrée par la pression ($R_T$).

Connaissant cette valeur de résistivité corrigée, le microprocesseur 65 peut alors opérer une compensation en température de la résistivité et ainsi déterminer une valeur de pression P corrigée et correcte, à savoir ici une valeur de pression égale à 4 bar.

Autrement, l'unité de contrôle 64 intègre des moyens de stockage et des moyens de calcul pour procéder à une compensation en température de la résistivité déterminée à partir des mesures fournies par les jauges de contraintes 6, 6a, 6b.

Grâce à cela, on peut non seulement affiner les mesures opérées par les jauges en prenant mieux en compte les caractéristiques des conduits mais aussi d'obtenir une valeur de résistivité plus précise, donc une meilleure estimation des pressions et débits qui en découlent.

D'une façon générale, la présente invention est applicable sur tout réseau de distribution de gaz au sein d'un bâtiment hospitalier, en particulier le réseau de distribution d'oxygène médical et le réseau de distribution d'air médical, alimentant les prises de fourniture de gaz murales auxquelles viennent se raccorder des dispositifs médicaux, dès lors que ces réseaux sont identiques ou similaires en termes de construction et par ailleurs soumis aux mêmes exigences normatives, en particulier en termes de pression nominale de distribution et/ou minimale d'alimentation des prises murales.

**Revendications**

1. Système de surveillance d'un réseau de distribution de gaz agencé au sein d'un établissement hospitalier comprenant :

   - une source de gaz (1) reliée fluidiquement à un conduit de gaz principal (21),
   - un dispositif régulateur de pression (23) agencé sur le conduit de gaz principal (21), le conduit de gaz principal (21) se ramifiant en plusieurs conduits de gaz secondaires (31, 32), en aval du dispositif régulateur de pression (23), lesdits conduit de gaz principal (21) et secondaires (31, 32) véhiculant du gaz sous pression, et
   - des jauges de contrainte (6, 6a, 6b) agencées en aval du dispositif régulateur de pression (23), sur les conduits de gaz principal et/ou secondaires (21, 31, 32), **caractérisé en ce que** :

      - les conduits de gaz principal (21) et secondaires (31, 32) en alliage de cuivre,
      - des moyens de mesure de température (68) sont agencés sur au moins l'un des conduits de gaz (21, 31, 32), en aval du dispositif régulateur de pression (23), afin d'y opérer au moins une mesure de température dudit conduit de gaz (21, 31, 32), lesdits moyens de mesure de température (68) étant configurés pour fournir ladite au moins une mesure de température (T) à au moins une unité de contrôle (64),
      - chaque jauge de contrainte (6, 6a, 6b) comprend une piste résistive (62) déformable configurée pour se déformer proportionnellement à la pression du gaz s'exerçant dans le conduit de gaz (21, 31, 32) sur lequel la jauge de contrainte (6, 6a, 6b) considérée est agencée, les jauges de contrainte (6, 6a, 6b) étant chacune associées à l'unité de contrôle (64), et
      - l'unité de contrôle (64) est configurée pour :

         a) déterminer une résistivité (R) de chaque jauge de contrainte (6, 6a, 6b) à partir de la déformation de la piste résistive (62) de la jauge de contrainte (6, 6a, 6b) considérée, d'une valeur de résistivité de référence (Ro), et de ladite au moins une mesure de température fournie par les moyens de mesure de température (68), et
         b) déterminer au moins une pression de gaz à partir de la résistivité (R) de chaque jauge de contrainte (6, 6a, 6b), chaque pression de gaz déterminée reflétant la pression du gaz s'exerçant dans le conduit de gaz (21, 31, 32) sur lequel la jauge de contrainte (6, 6a, 6b) considérée est agencée.

2. Système selon la revendication 1, **caractérisé en ce que** les moyens de mesure de température (68) comprennent au moins un capteur de température relié (67) à l'unité de contrôle (64).

3. Système selon la revendication 1, **caractérisé en ce que** les conduits de gaz (21, 31, 32) sont en un alliage de cuivre de type Cu-DHP.

4. Système selon les revendications 1 et 3, **caractérisé en ce que** la résistivité (R) de chaque jauge de contrainte (6, 6a, 6b) est déterminée en prenant en compte ladite au moins une mesure de température (T), un coefficient d'expansion thermique de l'alliage de cuivre et une température de référence ($T_0$) mémorisée.

5. Système selon la revendication 1, **caractérisé en ce que** chaque jauge de contrainte (6, 6a, 6b) comprend une piste résistive (62) déformable agencée sur un support (61.1) comprenant des moyens de fixation (61.2) permettant une fixation à la paroi périphérique externe d'un conduit de gaz (21, 31, 32).

6. Système selon la revendication 1, **caractérisé en ce que** l'unité de contrôle (64) est configurée pour déterminer, à partir de la valeur de résistance R déterminée, de ladite au moins une mesure de température fournie par les moyens de mesure de température (68) et d'une base de donnée donnant une correspondance entre pression et résistance R, la pression gazeuse régnant dans lesdits conduits de gaz principal (21) et secondaires (31, 32) véhiculant du gaz sous pression agencés en aval du dispositif régulateur de pression (23).

7. Système selon l'une des revendications 1 ou 6, **caractérisé en ce qu'**il comprend des moyens de mémorisation pour mémoriser la valeur de résistivité de référence (Ro) et la base de donnée.

8. Système selon la revendication 1 ou 6, **caractérisé en ce que** l'unité de contrôle (64) est configurée pour déterminer le ou les débits de gaz circulant dans le premier conduit secondaire (31) et/ou dans le second conduit secondaire (32) véhiculant du gaz sous pression agencés en aval du dispositif régulateur de pression (23), à partir d'au moins une mesure de pression ayant été déterminée.

9. Système selon la revendication 1, **caractérisé en ce que** la source de gaz (1) contient de l'oxygène ou de l'air.

10. Système selon la revendication 1, **caractérisé en ce que** les conduits de gaz (21, 31, 32) ont un diamètre externe compris entre 10 et 50 mm.

11. Système selon la revendication 1, **caractérisé en ce que** les conduits de gaz (21, 31, 32) ont un diamètre interne compris entre 12 et 14 mm et/ou une épaisseur de paroi comprise entre 0.5 et 1.5 mm.

12. Système selon la revendication 1, **caractérisé en ce que** les premier et second conduits secondaires (31, 32) ont des diamètres externes (D2, D3) égaux et/ou inférieurs au diamètre externe (D1) du conduit de gaz principal (21).

13. Système selon la revendication 1, **caractérisé en ce que** le dispositif régulateur de pression (23) est configuré pour contrôler la pression et garantir une pression comprise entre 3 et 7 bar relatifs.

14. Installation d'alimentation en gaz (100) comprenant un réseau de conduits de distribution de gaz agencé au sein d'un établissement hospitalier, servant à véhiculer du gaz sous pression, ledit réseau de distribution de gaz comprenant le conduit de gaz principal (21) se ramifiant en les conduits de gaz secondaires (31, 32), **caractérisé en ce qu'**elle comprend un système de surveillance du réseau de distribution selon l'une des revendications précédentes.

15. Installation selon la revendication 14, **caractérisée en ce que** le conduit de gaz principal (21) et les conduits de gaz secondaires (31, 32) se sous-disant en des premières sous-ramifications et des secondes sous-ramifications, au moins une partie des premières sous-ramifications et/ou des secondes sous-ramifications étant reliées à des prises murales de distribution de gaz (411-41n, 321-32n).

FIG. 1

FIG. 2

Europäisches
Patentamt

European
Patent Office

Office européen
des brevets

**RAPPORT DE RECHERCHE EUROPEENNE**

Numéro de la demande

EP 25 17 3256

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2005/275548 A1 (ABEL JOSEPH H [US] ET AL) 15 décembre 2005 (2005-12-15) * alinéas [0003], [0015], [0019], [0096] - [0100], [0186]; figures 1,2 * ----- | 1-15 | INV. F17C13/02 F17D1/04 |
| A | CN 114 352 944 A (KUOPT STANDARD AUTOMOBILE COMPANY) 15 avril 2022 (2022-04-15) * le document en entier * ----- | 1-15 | |
| A | EP 3 486 548 A1 (AIR LIQUIDE [FR]) 22 mai 2019 (2019-05-22) * alinéa [0059]; revendications 1-4 * ----- | 4 | |
| A | US 2023/285709 A1 (MARCHAL FREDERIC [FR]) 14 septembre 2023 (2023-09-14) * alinéa [0180]; figures 1-4 * ----- | 1 | |

|  |  |
|---|---|
|  | DOMAINES TECHNIQUES RECHERCHES (IPC) |
|  | F17C F17D A61M |

Le présent rapport a été établi pour toutes les revendications

| Lieu de la recherche | Date d'achèvement de la recherche | Examinateur |
|---|---|---|
| Munich | 4 septembre 2025 | Fritzen, Claas |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

...........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 25 17 3256**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**04-09-2025**

| Document brevet cité au rapport de recherche | Date de publication | Membre(s) de la famille de brevet(s) | | Date de publication |
|---|---|---|---|---|
| US 2005275548 A1 | 15-12-2005 | CA | 2458215 A1 | 27-02-2003 |
| | | CN | 1559060 A | 29-12-2004 |
| | | EP | 1428193 A1 | 16-06-2004 |
| | | KR | 20040062532 A | 07-07-2004 |
| | | MX | PA04001576 A | 07-03-2005 |
| | | US | 2003034885 A1 | 20-02-2003 |
| | | US | 2005275548 A1 | 15-12-2005 |
| | | WO | 03017224 A1 | 27-02-2003 |
| | | WO | 2004031761 A2 | 15-04-2004 |
| CN 114352944 A | 15-04-2022 | CN | 114352944 A | 15-04-2022 |
| | | EP | 3985371 A1 | 20-04-2022 |
| | | US | 11262247 B1 | 01-03-2022 |
| EP 3486548 A1 | 22-05-2019 | AU | 2018267576 A1 | 06-06-2019 |
| | | CA | 3024810 A1 | 21-05-2019 |
| | | CN | 109812688 A | 28-05-2019 |
| | | EP | 3486548 A1 | 22-05-2019 |
| | | FR | 3073921 A1 | 24-05-2019 |
| | | ZA | 201807719 B | 26-06-2019 |
| US 2023285709 A1 | 14-09-2023 | AU | 2023201384 A1 | 28-09-2023 |
| | | CA | 3191354 A1 | 09-09-2023 |
| | | CN | 116726327 A | 12-09-2023 |
| | | EP | 4241817 A1 | 13-09-2023 |
| | | ES | 3010565 T3 | 03-04-2025 |
| | | FR | 3133317 A1 | 15-09-2023 |
| | | JP | 2023133220 A | 22-09-2023 |
| | | US | 2023285709 A1 | 14-09-2023 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3922895 A
- EP 1983251 A
- US 2023285709 A
- EP 3985371 A